# EUROPEAN PATENT APPLICATION

(11) **EP 1 343 105 A2**
(43) Date of publication of application: **10.09.2003**
(21) Application number: 03100414.6
(22) Date of filing: 21.02.2003
(51) Int. Cl.: G06F 17/60

(54) **Method for automatically selecting a resource in a pre-press workflow system**

(30) Priority: 05.03.2002 EP 02100221
(71) Applicant: AGFA-GEVAERT, 2640 Mortsel (BE)
(72) Inventor: Frings, Peter, 2640, Mortsel (BE)

(57) **Abstract**

A method for selecting a resource (31, 32, 33) for processing a job in a pre-press workflow system. The method includes obtaining a processing parameter (11, 12, 13) for processing the job; checking a rule (21, 22, 23) related (41) to the processing parameter (11, 12, 13); and automatically selecting the resource (31, 32, 33) for processing the job. The automatic selection is based on the rule (21, 22, 23).

## Description

### FIELD OF THE INVENTION

The invention relates to the field of pre-press workflow systems, and in particular to resources used in such systems.

### BACKGROUND OF THE INVENTION

In a pre-press workflow system, as disclosed e.g. in patent application **WO 01/25907**, jobs are processed. A job involves the processing of a specific set of document pages according to specified instructions. In processing a job, resources are used, which are objects that are required to produce the final result. Examples of resources are the output profiles for the press and for the proofing apparatus, calibration curves, etc. (see patent application **EP-A-1 083 739** for more information on profiles, proofing, calibration and related terms).

In presently available pre-press workflow systems, the resources that are used for a job have to be specified by the user of the pre-press workflow system.

There is still a need for an improved method for selecting a resource in a pre-press workflow system.

### SUMMARY OF THE INVENTION

The present invention is a method for selecting a resource for processing a job in a pre-press workflow system as claimed in independent claim 1. Preferred embodiments of the invention are set out in the dependent claims. Preferably, a method in accordance with the invention is implemented by a computer program as claimed in claim 10.

A method in accordance with the invention involves obtaining one or more processing parameters for processing a job. One or more rules are checked that are related to these processing parameters. Based on these rules, a resource for processing the job is selected automatically.

A "processing parameter" is a basic parameter that is used in the pre-press workflow. Examples of processing parameters are the type of receiving substrate on which the job will be output (such as film, printing plate, paper), the ink that will be used in printing, the used devices (such as film/plate setter, press), etc. The processing parameters are typically settings associated with a job that is to be processed. A "resource" is an object that is required to produce the final result of the pre-press workflow system. Preferably, the pre-press workflow system includes a number of "task processors" which are software components that perform one or more tasks to process the job. Such a task processor has a number of resources attached to it. Examples of resources are output profiles for the press and for the proofing apparatus, calibration curves for the press and for the proofing apparatus, linearization curves for the film/plate setter, etc.

The invention has several advantages. A pre-press workflow system in accordance with the invention is user-friendly because the user does not have to specify the resources any more. Further, the creation and processing of jobs is much faster than with prior art systems. The risk of making errors is greatly reduced.

In a preferred embodiment of the invention, the user can override (i.e. replace) the automatically selected resource by another resource he or she specifies.

Further advantages and embodiments of the present invention will become apparent from the following description and drawing.

### BRIEF DESCRIPTION OF THE DRAWINGS

The invention is described with reference to the following drawing without the intention to limit the invention thereto, and in which:

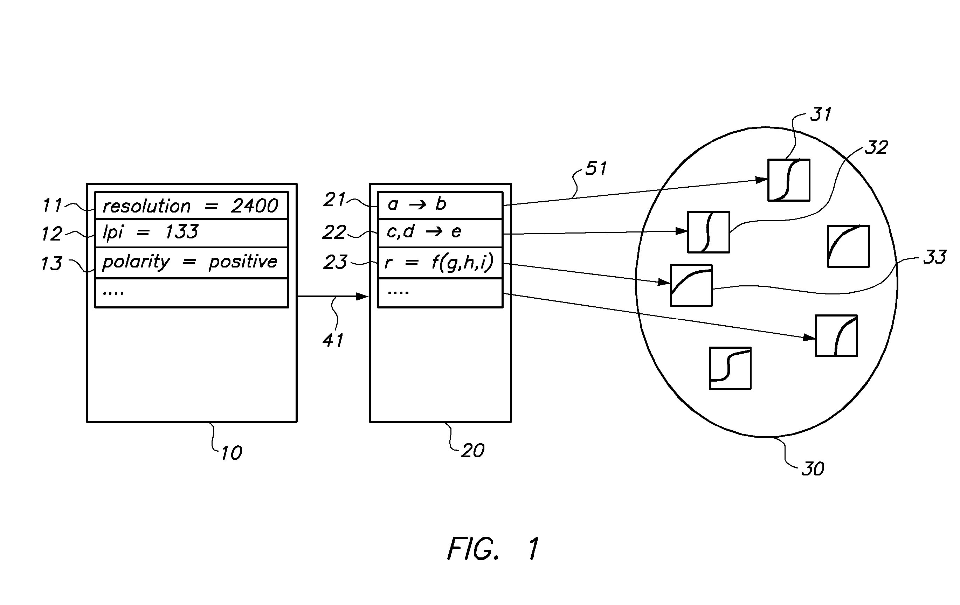

Fig. 1 shows an embodiment of a system in accordance with the invention.

### DETAILED DESCRIPTION OF THE INVENTION

Fig. 1 shows a plurality of job settings 10 that include processing parameters 11, 12, 13. Each processing parameter includes a designation and a value, e.g. 'resolution = 2400', 'lpi = 133', 'polarity = positive'.

A set 20 of rules 21, 22, 23 are related to the processing parameters 11, 12, 13. The relation is indicated in Fig. 1 by arrow 41. Some examples of rules 21, 22, 23, related to processing parameters, 11, 12, 13, are: a specific screen has to be used for all text, while a stochastic screen will be used for all images; a certain calibration curve is to be used in particular circumstances; a particular profile is to be used for a given type of receiving substrate, or for a given type of ink, or for a given output device, or for a given combination of two or more of these processing parameters; a specific compensation curve has to be used for a specific device.

Preferably, the rules are drawn up by a system administrator of the company or department that uses the pre-press workflow system. An advantage of the invention is its flexibility: any rules may be drawn up. Some rules may be tailored especially to the needs of the company or department using the system.

Fig. 1 further shows a resource pool 30 with resources 31, 32, 33. Resources may either be created, edited or both by the pre-press workflow system, such as e.g. linearization and calibration curves, or they may be imported by the pre-press workflow system, such as e.g. output profiles.

The outcome of a rule 21, 22, 23 is a resource 31, 32, 33. There is thus a relation between the rules 21, 22, 23 and the resources 31, 32, 33; this relation is indicated in Fig. 1 by arrows such as arrow 51. Thus, via one or more rules 21, 22, 23, resources 31, 32, 33 are linked to processing parameters 11, 12, 13. The link is indicated in Fig. 1 by arrows 41, 51. A simple example of a rule is: use profile 'r900_satin' for the following processing parameters: press: 'glossy wet'; receiving substrate: 'coated glossy'; ink set: 'warmer swop'; screen type: 'Agfa Balanced Screening™ ', frequency: 110, dotshape: round. However, the rules 21, 22, 23 may also be complex, as illustrated by the other examples mentioned above.

In a preferred embodiment of the invention, a first compensation curve is associated with a first device and a second compensation curve is associated with a second device. A compensation curve is a curve that corrects for a behavior of the concerned device; the compensation curve may e.g. be a calibration curve. As an example, the first device is a film or a plate setter and the second device is a printing press. In this example, the first compensation curve is a resource and the first device and the receiving substrate are relevant processing parameters; analogously the second compensation curve is another resource and the second device, the receiving substrate and the ink set used on the printing press are relevant processing parameters for this other resource.

The first and second compensation curves may be combined into a global compensation curve that corrects for the behavior of both the first and second devices at the same time. Moreover, since the first and second compensation curves are linked 41, 51 to the relevant processing parameters via one or more rules, the global compensation curve may be applied automatically. When a job is processed, the processing parameters of the job may be verified and, if the processing parameters satisfy the conditions laid down by the rules, the global compensation curve is automatically applied to the job.

The invention is not limited to the embodiments described above. In a specific embodiment, the same resource may be designated by two or more rules. In a particular embodiment, if no rule is applicable, a default resource may automatically be selected.

Having described in detail preferred embodiments of the current invention, it will now be apparent to those skilled in the art that numerous modifications can be made therein without departing from the scope of the invention as defined in the appending claims.

### List of reference signs

10 : job settings
11 : processing parameter
12 : processing parameter
13 : processing parameter
20 : set of rules
21 : rule
22 : rule
23 : rule
30 : resource pool
31 : resource
32 : resource
33 : resource
41 : arrow
51 : arrow

## Claims

1. A method for selecting a resource (31, 32, 33) for processing a job in a pre-press workflow system, the method comprising the step of:
- obtaining a processing parameter (11, 12, 13) for processing said job;
**characterized in that** the method further comprises the steps of:
- checking a rule (21, 22, 23) related (41) to said processing parameter (11, 12, 13);
- automatically selecting said resource (31, 32, 33) for processing said job, wherein said selection is based on said rule (21, 22, 23).

2. The method according to claim 1 wherein said resource (31, 32, 33) is a profile.

3. The method according to claim 1 wherein said processing parameter (11, 12, 13) is a first device and wherein said resource (31, 32, 33) is a first compensation curve (31, 32, 33) associated (41, 51) with said first device.

4. The method according to claim 3 further comprising the steps of:
- checking another rule (21, 22, 23) related (41) to another processing parameter (11, 12, 13), wherein said other processing parameter (11, 12, 13) is a second device;
- automatically selecting another resource (31, 32, 33) for processing said job, wherein said selection is based on said other rule (21, 22, 23) and wherein said other resource (31, 32, 33) is a second compensation curve (31, 32, 33) associated (41, 51) with said second device.

5. The method according to claim 4 further comprising the step of:
- combining said first (31, 32, 33) and said second (31, 32, 33) compensation curve into a global compensation curve.

6. The method according to any one of the preceding claims further comprising the steps of:
- obtaining a plurality of processing parameters (11, 12, 13) for processing said job;
- checking a plurality of rules (21, 22, 23) related (41) to said plurality of processing parameters (11, 12, 13);
- automatically selecting said resource (31, 32, 33) for processing said job, wherein said selection is based on said plurality of rules (11, 12, 13).

7. The method according to any one of the preceding claims further comprising the step of:
- overriding said automatically selected resource (31, 32, 33) by a specific resource (31, 32, 33) specified by a user.

8. A system for processing data comprising means for carrying out the steps of the method according to any one of claims 1 to 7.

9. The system according to claim 9 further comprising an output device for outputting said job wherein said output device is selected from the group of an image setter, a plate setter and a printing press.

10. A computer program comprising computer program code means adapted to perform the steps of the method according to any one of claims 1 to 7 when said program is run on a computer.

11. A computer readable medium comprising program code adapted to carry out the method according to any one of claims 1 to 7 when run on a computer.
